# EUROPEAN PATENT APPLICATION

(11) **EP 4 641 718 A1**
(43) Date of publication of application: **29.10.2025**
(21) Application number: 24171572.1
(22) Date of filing: 22.04.2024
(51) Int. Cl.: H01M 8/04302, H02M 1/36, H02M 7/219, H02J 3/16

(54) **METHOD OF OPERATING AN IGBT CONVERTER WITH AN ELECTROLYZER SYSTEM, RECTIFIER AND ELECTROLYSIS PLANT**

(71) Applicant: Siemens Energy Global GmbH & Co. KG, 81739 München (DE)
(72) Inventor: Craciun, Bogdan, 91052 Erlangen (DE); Bendig, Marvin, 90513 Zirndorf (DE); Langenberg, Nils, 90461 Nürnberg (DE); Loku, Fisnik, 90768 Fürth (DE)

(57) **Abstract**

A method of operating an IGBT converter (1) interconnected with a power transformer (3) and an electrolyzer system (10) is presented, wherein reactive power (Q) from an AC network (2) is absorbed by the IGBT converter (1) during a transient operation of the electrolyzer system (10). The method comprising the steps of setting i) an output voltage of the power transformer (3) to a value rated higher than a limit defined by a current-voltage characteristic (IV) of the electrolyzer system (10), connecting ii) the IGBT converter (1) to the grid (2) without connecting a DC input (6) of the electrolyzer system (10), actively absorbing iii) the reactive power (Q) from the AC network (2), thereby lowering an AC voltage of the IGBT converter (1), and, when the AC voltage is lowered, reducing the DC voltage down to the limit (V_{minDC}) matching the current-voltage characteristic (IV) of the electrolyzer system (10), connecting iv) the DC output of the converter (1) to the DC input (6) of the electrolyzer system, and reducing v) the reactive power transfer, and initiating a normal operation of the electrolyzer system (10). Moreover, a related rectifier (20) and an electrolysis plant (100) are presented.

## Description

The present invention relates to a method of operating an IGBT converter interconnected with a power transformer and an electrolyzer system. Moreover, a rectifier and an electrolysis plant are subject to the present invention.

In a conventional power supply of an electrolyzer, an electrolyzer system or a related plant, the energy is converted from an alternating current (AC) to a direct current (DC) by means of a power supply which mainly consists of a power transformer and a (line-commutated) rectifier converter, for instance.

Reactive power is responsible in an AC circuit for maintaining the magnetization of the inductive and capacitive components. Hence by independently controlling it with the IGBT converter additional features of the control are enabled. Traditionally, the reactive power is used to compensate voltage differences appearing in the voltage supply. In this way, an active "support" was provided in case the grid encounters fluctuations or irregularities or transient behavior.

So far, conventional power supply solutions or related systems were dimensioned and set up to the necessary minimum rectified DC voltage only. I.e., this minimum voltage matches the minimum point on the current-voltage characteristic or IV-point of the respective electrolyzer(s). Consequently, in the described way, power supply developers or providers have always been forced to set lower AC voltage (as compared to higher ones which could have been more efficient) to cope with the requirements of the electrolyzer IV-curves.

In other words, conventional and market-available solutions dimension the secondary terminal of the transformer to the minimum point needed by the IV-characteristic of the transformer. Although, some pre-charge equipment might as well be used to compensate or bridge any mismatches in addition.

It is an object of the present invention to provide means to improve this situation and particularly to increase an output voltage of the related transformer and set or adjust it at a higher rated value. The present invention in IGBT technology actually enables technological progress to be applied to the electrolyzer system and improvement of its integration into the grid. The presented IGBT converter functionality also enables the independent control between the active and the reactive power transferred between the power supply and the grid, in this way enabling additional features which help the system integrators to implement simplification, reliability improvement, and cost optimizations.

Particularly the proposed solution enables enhancements in the connection of electrolyzer systems by performing reactive power management, e.g. during a start or ramp-up and transient operation; thereby matching the output voltage of the power transformer with the IV curve of the electrolyzer system. The presented solution further prevents large current ramps in the electrolyzer stacks which are known to be very detrimental to the stack's lifetime and hardware material. Actually, such current ramps are known to create damage in the electrolyzer stacks due to large current ramps created by the backward diodes.

More particularly, the presented solution allows to advantageously set the output voltage of the transformer to a higher rated value than the minimum rectifier voltage level. Consequently, by this measure, the efficiency of the system is boosted since so-called copper or I²R-losses can reliably be reduced.

The mentioned object is achieved by the subject-matters of the independent claims. Advantageous embodiments are subject-matters of the dependent claims.

Hence, an aspect of the present invention relates to a method of operating an IGBT converter interconnected with a power transformer and an electrolyzer system, wherein reactive power from a related electrical AC network or grid is absorbed by the IGBT converter during a transient operation of the electrolyzer system. The reactive power absorption is carried out for the purpose and effect of reducing the related AC voltage. The term "transient operation" preferably relates to a startup operation of the electrolyzer system. However, it may in the context of the present invention as well relate to a transient grid voltage "swell", for instance.

The inventive method comprises setting an output voltage of the power transformer to a value rated higher than a limit defined by a current-voltage characteristic (IV) of the electrolyzer system. By this measure, the efficiency of the system can advantageously be boosted in general, meaning not only during start-up but also during a normal operation, since the mentioned copper losses are reduced.

The inventive method further comprises connecting the IGBT converter to the AC network without connecting a DC input of the electrolyzer system. That means essentially that the connection of IGBT converter to the electrolyzer system is switched off.

In addition, the inventive method comprises actively absorbing the reactive power from the AC grid, thereby lowering an AC input voltage of the IGBT converter. Once the AC voltage is lowered, the method further contemplates reducing also the DC voltage (such as by a change of the converter DC link setpoint) down to the limit finally matching the current-voltage characteristic of the electrolyzer system.

The inventive method then comprises connecting or activating the DC output of the converter to the DC input of the electrolyzer system.

The inventive method comprises reducing or controlling the reactive power transfer or intake - which it was initially absorbing from the AC network - downwards, and initiating a normal or steady-state operation of the electrolyzer system. Said normal or steady-state operation of the electrolyzer system preferably relates to a normal or normally rated hydrogen production.

The electrolysis context aimed at by the present invention is water electrolysis for the production of renewable (green) hydrogen, such as by a PEM (polymer electrolyte membrane) electrolysis systems. In the alternative, also alkaline electrolysis systems maybe contemplated in the inventive context.

As an advantage of the present solution, by utilizing the IGBT converter with the functionality described herein, use of higher voltages (as compared to conventional solutions) in the secondary side of the transformer even in the situation of increased steady-state voltages is enabled. As mentioned above, this comes with a considerable benefit of transacted energy and/or energy efficiency, thereby raising the capacity of the electrolyzer system and increasing its operating grade towards ever greater systems and plants on an industrial (gigawatt) scale. Apparently, the presented solution tackles one of the major challenges in the sector-spanning energy transition. At the same time, the present invention smartly uses IGBT converter topologies to prevent erratic current ramps into the electrolyzers by featuring an independent switch functionality between active and reactive power transfer.

In an embodiment the transient operation is a startup procedure of the electrolyzer system. Preferably, the transient operation does not relate to a normal or regular operation of the electrolyzer, and absorption of reactive power is disabled during the normal operation of the electrolyzer, such as when the normal reactive power control features are enabled to support the grid voltages.

Instead, an embodiment of the invention features the reactive power to be absorbed by the IGBT converter until the so formed electrolyzer power supply has completed the ramping procedure.

Alternatively, the transient operation is a steady state fluctuation of a grid voltage, particularly a voltage swell, e.g. with a (positive) deviation of up to 10% as compared to an average or steady state. Also, in this (transient) state, the IGBT power converters are able to bring the voltage down to an acceptable level where the electrolyzer stacks can readily be electrically connected. To this effect, the inventive features, amongst others comprising absorption of reactive power, can be effective and enabled in case of a quasi-steady-state voltage swell, which can cause a mismatch between rectified grid voltage and the minimum IV-point.

The limit defined by the current-voltage characteristic (IV) of the electrolyzer system corresponds to a minimum converter or rectifier voltage level, or a rectified grid voltage. This level might as well be described as the point or level where the electrolyzer system is sufficiently secured or protected against high uncontrolled power ramps.

In an embodiment of the inventive method, when the AC voltage is lowered, the DC voltage is reduced by changing a setpoint of the DC link downwards.

After, however, a connection of the DC output of the converter to the electrolyzer system is established, the setpoint of the DC link or DC link voltage is increased or changed upwards to meet a steady-state DC voltage level.

The DC output of the converter defines or is controlled by said DC link voltage, wherein the DC voltage of the electrolyzer system in steady-state approximately equals said DC link voltage (defined by the DC output of the converter).

In an embodiment reactive power transfer is reduced until and absorption of reactive power is stopped when or after the DC link voltage equals the DC voltage in steady-state.

A further aspect of the present invention relates to a rectifier or, in other words, a power supply arrangement or a related IGBT converter topology. The rectifier comprises an IGBT converter being set up to be interconnected with a power transformer and an electrolyzer system, wherein the rectifier is configured to perform the described method.

A further aspect of the present invention relates to an electrolysis plant comprising the described rectifier.

The electrolysis plant comprises at least one electrolyzer system and, preferably, a plurality of rectifiers. Internal control features of the system - which control a voltage level of a particular rectifier - are then expediently switched off in order to allow said particular rectifier to absorb the reactive power of the related electrolyzer system without the remaining rectifiers to interfere with this absorption during the transient operation via the controls.

Then, a related communication between the IGBT converters and the controls can only set in again during normal operation; in other words: At plant level this can be coordinated so that the rest of the converters do not react with reactive power due to a lower AC voltage induced by the starting power supply. In this situation all grid support functions shall be deactivated until the electrolyzer power supply which performs the connection has completed the ramping procedure.

Advantages and embodiments relating to the described method are valid or pertain likewise to the rectifier and/or the electrolysis plant as described.

Further, features and advantageous embodiments become apparent from the following description of the exemplary embodiment in connection with the Figures.
Figure 1 shows a schematic circuit diagram of an inventive rectifier system interconnected to electrolyzer.
Figure 2 shows a simplified flowchart, indicating inventive method steps according to the present invention.
Figure 3 indicates a more detailed process flow according to the inventive method.

Like elements, elements of the same kind and identically acting elements may be provided with the same reference numerals in the figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

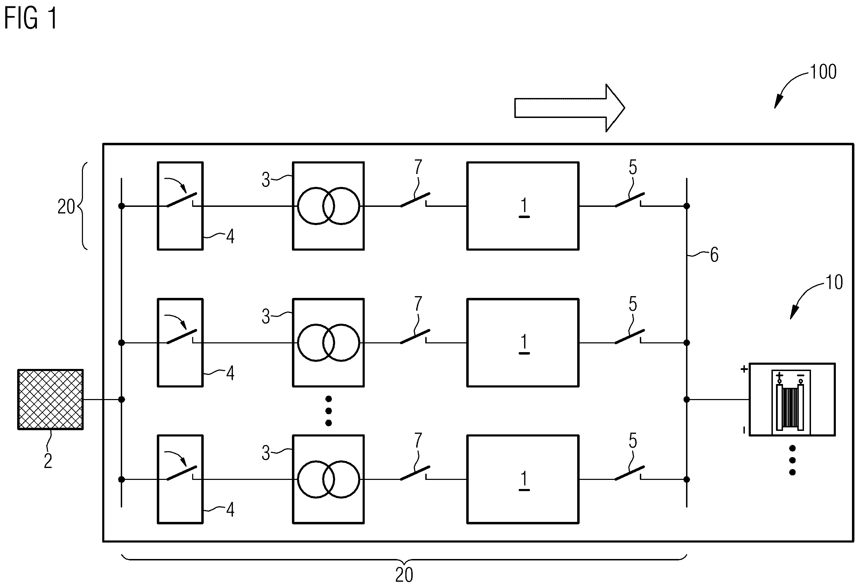

Figure 1 shows a basic circuit diagram of an electrolysis plant 100. The electrolysis plant 100 comprises a rectifier 20, comprising an IGBT topology for converting an AC current into a DC current to be provided as input for an electrolyzer or electrolyzer system 10.

Particularly, the rectifier 20 comprises a plurality of IGBT converters connected in parallel, wherein each of the IGBT converters is put in series interconnection with a power transformer 3 which can be electrically connected to the IGBT converter 1 via an AC switch 7.

A specific configuration of the transformers 3 is not limited in the context of the present invention, however. Instead, the transformers may be set up and/or arranged in any expedient configuration and with any winding geometry or number of windings, e.g. with a two-winding, three-winding or multiple winding type (e.g. star or delta configuration).

As indicated the electrolyzer or electrolyzer system 10 is connected to the plurality of rectifier branches in series.

As further shown on the left in Figure 1, each of power transformers 3 is connected in series with a respective medium voltage switchgear 4. The medium voltage switchgears 4 are connected to an AC network or grid which is indicated by reference 2.

On the right in Figure 1 a DC, input for the electrolyzer 10 is denoted with reference numerals 6.

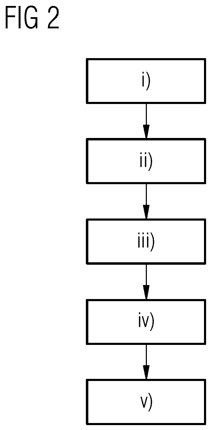

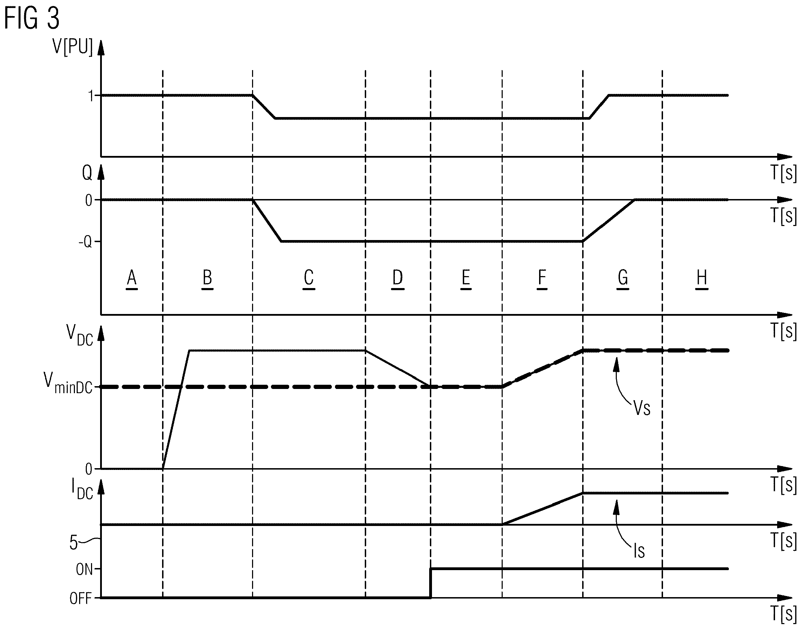

This inventive rectifier or power supply arrangement 20 is configured to perform the inventive method as described by way of Figures 2 and 3 in further detail.

It is evident that even though this is not explicitly indicated in Figure 1, the plant 100 may comprise a plurality of electrolyzer systems 10, wherein each of which may be connected to a plurality of IGBT converters.

The arrow Q shall further indicate that a reactive power Q flow or absorption from an AC side towards the DC side (cf. left to right) in the scheme as a particular feature of the present invention (cf. below).

Hence the electrolysis plant 100 comprises at least one electrolyzer system 10 and a plurality of rectifiers 20.

Moreover, basic or regular power factor or reactive power correction or control features (such as cos phi, Q(U), Q(P), ref Q) may already be present in the control architectures of such power converters 1 since this is usually requested by grid operators anyway. These control features of the system might regularly control a voltage level of a particular rectifier 20.

According to an embodiment of the present invention, said control features (not explicitly indicated) are preferably switched off in order to allow said particular rectifier 20 to absorb the reactive power Q without the remaining rectifiers 20 to interfere with this absorption during the transient operation via the controls.

Figure 2 shows a simplified flowchart of the main inventive method steps. The subject is a method of operating an IGBT converter 1 interconnected with a power transformer 3 and an electrolyzer system 10, wherein reactive power Q from an AC network 2 is absorbed by the IGBT converter 1 during a transient operation of the electrolyzer system 10. The transient operation e.g. relates to a ramp-up of the electrolyzer system, or a mode of parrying or countering unexpected voltage swells (see below).

Under step i) the method comprises setting an output voltage of the power transformer 3 to a value rated higher than a limit defined by a current-voltage characteristic (IV) of the electrolyzer system 10.

Under step ii) the method comprises connecting the IGBT converter 1 to the grid 2 without connecting a DC input 6 of the electrolyzer system 10.

Under step iii) the method further comprises actively absorbing the reactive power Q from the AC network 2, thereby lowering an AC voltage of the IGBT converter 1, and, when the AC voltage is lowered, reducing the DC voltage down to the limit V_{minDC} matching the current-voltage characteristic of the electrolyzer system 10 (cf. as well Figure 3 below).

Under step iv) the method as well comprises connecting the DC output of the converter 1 to the DC input 6 of the electrolyzer system.

Finally, under step v) the method comprises reducing the reactive power transfer, and introducing a normal operation of the electrolyzer system 10.

By way of Figure 3 particulars of the present invention are illustrated in greater detail. Yet in a simplified and rather qualitative manner, several variables and parameters are put on the y-axis depending on time or progress as laid on the x-coordinate. It is apparent from the middle of the scheme of Figure 3 that capital letters A, B, C, D, E, F, G and H indicate chronologically the subsequent operational modes of the inventive method over time.

Under the initial mode or period A, the converter(s) 1 is/are preferably connected to the AC grid 2 such as via the AC switches 7 (cf. Figure 1).

As per the subsequent mode B, the respective IGBT converter 1 of the rectifier arrangements 20 may be initialized, controlled or modulated in a way to load a related "DC link". During this period the DC link voltage V_{DC} - laid below the operational mode in Figure 3 - is preferably increased from zero up to a stable or controlled value (i.e. the level attained in mode B and C). In other words, the converters 1 will start to regulate the DC link.

After the DC link is stably controlled in section C, the converters 1 will actively absorb reactive power Q and thereby bring the AC voltage V_{grid} to lower values. The upper part of the figure particularly indicates the grid voltage V_{grid} such as given in the per-unit system (cf. [PU]).

According to mode C, ramp-up of the electrolyzer system is started and the reactive power absorption commenced. That is to say that the respective converter 1 or the affected converters will connect to the grid 2 without the DC side connected, meaning that the DC switch 5 is turned off.

Once or after the AC voltage V_{grid} is lowered, the DC voltage V_{DC} can also be reduced by changing a setpoint of the DC link down to a minimum electrolyzer DC voltage V_{minDC} as shown in mode D in Figure 3. In other words: when the voltage level attains lower values, the DC voltage can also be reduced. In this situation, the DC voltage V_{DC} is advantageously brought to a level where the electrolyzer system is protected from uncontrolled and erratic current or power ramps.

In line with the reduction of the AC grid voltage as shown in mode C in the upper part of Figure 3, also the reactive power Q is reduced accordingly down to an expedient negative amount "-Q". The negative sign or negative value is in accordance with the absorption of reactive power Q as per the described inventive functionality.

At the transition from mode D to E, it is apparent at the very bottom of Figure 3 that the switch 5 is moved or turned on, thereby establishing a connection of the DC output of the respective converter 1 to the electrolyzer system 10. This means that the DC switch 5 is allowed to create the connection between the DC side of the converter and the DC side of the electrolyzer. Once the DC connection is closed the respective converter 1 can ramp up the DC link.

During this period of mode E right after the establishment of the connection, the DC link voltage remains at the particular level of V_{minDC}. The same holds for the value of the reactive power Q and that one of the grid voltage V_{grid}.

Then, subsequent to mode E (cf. mode F), the setpoint V_{DC} of the DC link is changed upwards again to meet a steady state DC voltage Vₛ. At this point (cf. also mode G) the DC output of the converter 1 or the DC link voltage V_{DC} equals the DC voltage in steady-state Vₛ.

Analogously to the DC link voltage, the DC current I_{DC} increases from a base value towards the steady-state current Iₛ in mode F.

At this point the reactive power Q which the IGBT functionality was initially absorbing from the AC network 2 is reduced (according to amount). Hence, as from the transition from F onwards into the subsequent section G, reactive power Q absorption is reduced to zero.

Simultaneously the grid voltage is increased to its normative or base unit value 1. In other words, reactive power transfer is reduced until - and absorption of reactive power Q is stopped - when or particularly shortly after the DC link voltage (V_{DC}) approaches the DC voltage in steady-state Vₛ.

In subsequent period H, finally, a normal or steady-state operation of the electrolyzer system(s) 10 is introduced or initiated, and a mode of rated or regular hydrogen production established.

The proposed solution inter alia brings the advantage of independent reactive control of IGBT converter when the DC circuit is not connected to the system.

Besides in a ramping procedure, the inventive functionality can effectively be applied and is to be used also in case the grid voltage experiences (transient) voltage swells in normal operation (e.g. in case of a deviation of up to 10% max). This might as well generate a mismatch between the rectified grid voltage and the minimum IV-point causing damage in the stacks due to large current ramps such as created by the backward diodes.

The same strategy applies in a coordinated manner to all the IGBT converters 10, or it can apply individually to the IGBT converter present in the hardware configuration of the electrolyzer supply. At plant level this can be coordinated so that the rest of the converters do not react with reactive power due to a lower AC voltage induced by the starting power supply. In this situation all grid support functions shall be deactivated until the electrolyzer power supply - which performs the connection - has completed the ramping procedure.

## Claims

1. A method of operating an IGBT converter (1) interconnected with a power transformer (3) and an electrolyzer system (10), wherein reactive power (Q) from an AC network (2) is absorbed by the IGBT converter (1) during a transient operation of the electrolyzer system (10), the method comprising the following steps:
- i) setting an output voltage of the power transformer (3) to a value rated higher than a limit defined by a current-voltage characteristic (IV) of the electrolyzer system (10),
- ii) connecting the IGBT converter (1) to the grid (2) without connecting a DC input (6) of the electrolyzer system (10),
- iii) actively absorbing the reactive power (Q) from the AC network (2), thereby lowering an AC voltage of the IGBT converter (1), and, when the AC voltage is lowered, reducing the DC voltage down to the limit (V_{minDC}) matching the current-voltage characteristic (IV) of the electrolyzer system (10),
- iv) connecting the DC output of the converter (1) to the DC input (6) of the electrolyzer system,
- v) reducing the reactive power transfer, and initiating a normal operation of the electrolyzer system (10).

2. The method according to claim 1, wherein the transient operation is a startup procedure of the electrolyzer system (10) .

3. The method according to claim 2, wherein the reactive power (Q) is absorbed by the IGBT converter (1) until the electrolyzer power supply has completed the ramping procedure.

4. The method according to one of the previous claims, wherein the transient operation is a steady-state fluctuation of a grid voltage (V_{grid}), particularly a voltage swell with a deviation of up to 10 %.

5. The method according to one of the previous claims, wherein the limit (V_{minDc}) defined by the current-voltage characteristic (IV) of the electrolyzer system (10) corresponds to a minimum converter voltage level.

6. The method according to one of the previous claims, wherein, when the AC voltage is lowered, the DC voltage (V_{DC}) is reduced by changing a setpoint of the DC link downwards.

7. The method according to one of the previous claims, wherein, after a connection of the DC output of the converter to the electrolyzer system (10) is established, the setpoint (V_{DC}) of the DC link is changed upwards to meet a steady-state DC voltage (Vₛ).

8. The method according to claim 7, wherein the DC output of the converter defines a DC link voltage, and wherein the DC voltage in steady state (Vₛ) equals said DC link voltage (V_{DC}) .

9. The method according to claim 8, wherein, reactive power transfer is reduced until and absorption of reactive power (Q) is stopped when the DC link voltage (V_{DC}) equals the DC voltage in steady state (Vₛ).

10. A rectifier (20), comprising an IGBT converter being set up to be interconnected with a power transformer and an electrolyzer system (10), wherein the rectifier (20) is configured to perform the method of one of the previous claims.

11. Electrolysis plant (100) comprising the rectifier (20) according to claim 10 and the electrolyzer system (10).

12. Electrolysis plant (100) according to claim 11 comprising at least one electrolyzer system (10) and a plurality of rectifiers (20) according to claim 10, wherein controlling features of the system which control a voltage level of a particular rectifier (20) are switched off in order to allow the particular rectifier (20) to absorb the reactive power (Q) without the remaining rectifiers (20) to interfere with this absorption during the transient operation via the controls.
